# EUROPÄISCHE PATENTSCHRIFT

(11) **EP 0 770 233 B1**
(45) Veröffentlichungstag und Bekanntmachung des Hinweises auf die Patenterteilung: **17.12.1997**
(21) Anmeldenummer: 95924956.6
(22) Anmeldetag: 30.06.1995
(51) Int. Cl.: G05D 1/08, B61F 5/22

(54) **VERFAHREN UND VORRICHTUNG ZUR REGELUNG DER ERDBEZOGENEN WAGENKASTENNEIGUNG BEI EINEM SCHIENENFAHRZEUG**
PROCESS AND DEVICE FOR REGULATING THE EARTH-RELATED INCLINATION OF RAIL VEHICLE BOXES
PROCEDE ET DISPOSITIF DE REGULATION DE L'INCLINAISON PAR RAPPORT A LA TERRE DE LA CAISSE DE WAGON DE VEHICULES SUR RAILS

(30) Priorität: 11.07.1994 EP 94110758
(43) Veröffentlichungstag der Anmeldung: 02.05.1997
(73) Patentinhaber: SIEMENS AKTIENGESELLSCHAFT, 80333 München (DE)
(72) Erfinder: STEIDL, Siegbert, D-91074 Herzogenaurach (DE); WAGNER, Günter, D-91320 Ebermannstadt (DE); JUNGKUNZ, Clemens, D-91056 Erlangen (DE); MÜLLER, Herbert, D-91058 Erlangen (DE); RATH, Bernhard, D-45966 Gladbeck (DE); STRIBERSKY, Anton, A-4906 Eberschwang (AT); DRÜCKE, Peter, D-28307 Bremen (DE); NIEMEYER-STEIN, Werner, D-28755 Bremen (DE)
(86) Internationale Anmeldenummer: EP9502548
(87) Internationale Veröffentlichungsnummer: WO9602027

(56) Entgegenhaltungen:
- EP-A- 0 271 592
- DE-A- 1 933 893
- DE-A- 2 705 221
- FR-A- 2 129 472

## Beschreibung

Die Erfindung betrifft ein Verfahren und eine Vorrichtung zur Regelung der erdbezogenen Wagenkastenneigung bei einem Schienenfahrzeug.

Bei Kurvenfahrten wirken in Schienenfahrzeugen auf Insassen und Transportgüter infolge der Zentrifugalkraft Querbeschleunigungen, die man aus Komfort- und Sicherheitsgründen gering zu halten versucht, ohne gleichzeitig die Fahrgeschwindigkeit zu Lasten von Fahrtdauer und Transportkapazität unnötig herabzusetzen. Wegen ansteigender Anforderungen wird angestrebt, gleisbautechnische Vorkehrungen (Überhöhung in Kurven) durch Maßnahmen im Schienenfahrzeug selbst zu ergänzen. Durch ein geeignetes Neigen des Wagenkastens läßt sich ein Teil der auf die Passagiere wirkenden Querbeschleunigung mit Hilfe der Schwerkraft neutralisieren. Steuerungen der Wagenkastenneigung relativ zum darunterliegenden Fahrwerk mit dem Ziel, die Querbeschleunigung zu vermindern, sind durch die EP-A-0 557 893 sowie durch die SE-B-442 846 bekannt.

Die EP-A-0 557 893 beschreibt ein System, bei dem die Neigung des Wagenkastens gegenüber dem Drehgestell durch eine Regelung der Querbeschleunigung im Wagenkasten erfolgt. Die Regelung benötigt eine Vorsteuerung, die mittels Kreiselsensoren einen auftretenden Gleisbogen erfaßt. Außerdem ist die Vorgabe eines zusätzlichen Sollwertes für den Winkel zwischen Wagenkasten und Drehgestell erforderlich. Die Güte der Regelung ist im bekannten Fall von der Vorsteuerung abhängig und setzt Kenntnisse über die Bauart der zu befahrenden Gleisbögen voraus.

Die SE-B-442 846 offenbart ein System, bei dem der Sollwert des Winkels zwischen Wagenkasten und Drehgestell aus den Beschleunigungswerten in der Lok sowie aus einem Zusatzsollwert aus der Winkeldifferenz zwischen dem vorderen und dem hinteren Drehgestell ermittelt wird. Dieses Neigesystem ist auf eine bestimmte Geometrie der Gleisbogenüberhöhung abgestimmt. Das System kann einen Gleisüberhöhungsfehler in der Geraden fälschlicherweise als eine Gleisbogenüberhöhung interpretieren, wodurch eine vorzeichenfalsche und deshalb unerwünschte Neigewinkelreaktion ausgelöst wird. Weiterhin kann die vorderste Fahrzeugeinheit aufgrund der langen Verarbeitungszeiten der Beschleunigungssignale nicht optimal geregelt werden.

In der DE-A-27 05 221 ist eine Anordnung zum Steuern einer Neigungsvorrichtung beschrieben, mit der der Wagenkasten eines Fahrzeuges im Verhältnis zum Laufwerk des Fahrzeuges in Neigungsrichtung einstellbar ist. Bei dieser Anordnung erfolgt die Steuerung bezüglich der unkompensierten Querbeschleunigung durch die Aufschaltung des die Differenz aus der mit einem Faktor gewichteten Zentrifugalbeschleunigung in Horizontalebene und der mit einem weiteren Faktor gewichteten Absolutneigung des Wagenkastens repräsentierenden Signals auf die Neigevorrichtung.

Die Anordnung gemäß der DE-A-27 05 221 wird durch ein Verfahren gesteuert, das folgende Schritte umfaßt:
- Ermittlung der Zentrifugalbeschleunigung in Horizontalebene,
- Bildung eines Sollwertes für die Absolutneigung des Wagenkastens gegenüber der als Inertialsystem betrachteten Erde,
- Ermittlung des Istwertes der Absolutneigung des Wagenkastens gegenüber der als Inertialsystem betrachteten Erde,
- Bildung wenigstens eines Regelsignals aus der Differenz zwischen Sollwert und Istwert der Absolutneigung des Wagenkastens,
- Verstellung des Winkels zwischen Fahrwerk und Wagenkasten quer zur Fahrtrichtung in Abhängigkeit vom gebildeten Regelsignal.

Bei dem aus der DE-A-27 05 221 bekannten Regelverfahren ist es damit nicht möglich, einen Sollwert für den Absolutneigewinkel des Wagenkastens, abhängig von der Fahrsituation, frei vorzugeben - also z. B. unterhalb einer Minimalgeschwindigkeit oder unterhalb minimaler Kurvenradien nicht zu neigen - und einen Regler für den die unkompensierte Querbeschleunigung wesentlich beeinflussenden Absolutneigewinkel frei zu entwerfen.

Durch die EP-A-0 271 592 ist ein Verfahren zur Neigungsregelung und eine Vorrichtung zur Durchführung dieses Verfahrens bekannt. Bei diesem Verfahren ist es notwendig, daß die Streckendaten in einem Massenspeicher abgespeichert werden. Für jede Speicherabschnittsweite (z. B. 1 m) muß hierzu der Gleisradius und die Kurvenüberhöhung durch Vermessen der Strecke vorgegeben werden. Damit müssen die Daten für jede Strecke, die mittels Neigungsregelung befahren werden soll, vorher in einem aufwendigen Datenerfassungsprozeß erfaßt werden. Für nicht im Massenspeicher abgelegte Strecken ist eine Neigungsregelung des Wagenkastens nicht möglich.

Die DE-A-19 33 893 beschreibt ein Verfahren zur Neigungsregelung eines Wagenkastens, bei dem die Differenz zwischen Gleisüberhöhung und der Ebene, in der das Scheinlot verläuft, zu Null geregelt wird. Unter Scheinlot versteht man hierbei das Lot auf die Ebene, in der keine Querbeschleunigungen auftreten. Bei diesem Verfahren ist also die Messung der Gleisüberhöhung erforderlich. Für diese Messung ist wenigstens ein Sensor im Bereich des Drehgestells notwendig. Aufgrund seiner Lage ist der Sensor großen dynamischen Belastungen ausgesetzt. Das Meßsignal enthält einen hohen Störpegel. Weiterhin wird bei diesem Verfahren nicht der für die Fahrgäste wichtige Winkel gegen die Horizontalebene, sondern der Winkel gegenüber dem geneigten Gleis geregelt.

Aus der DE-A-21 11 133 bzw. aus der korrespondierenden FR-A-2 129 472 ist ein Verfahren und eine Einrichtung zum gleisbogenabhängigen Steuern eines Schienenfahrzeuges zum Durchfahren von Kurven mit hoher Geschwindigkeit bekannt. Bei diesem Verfahren wird zur Ermittlung der Zentrifugalbeschleunigung die Druckdifferenz zwischen dem rechten und dem linken Hydraulik-Hubzylinder eines Fahrwerks gemessen. Die Druckmessung wird nicht zur Ermittlung der Wagenkastenmasse herangezogen.

Aufgabe der vorliegenden Erfindung ist es, ein Verfahren und eine Vorrichtung zu schaffen, die eine von der Bauart der Gleisbogenüberhöhungen und eine von auftretenden Störungen, wie z. B. Seitenwind, unabhängige Regelung der Wagenkastenneigung gewährleistet.

Die Aufgabe wird erfindungsgemäß durch ein Verfahren nach Anspruch 1 sowie durch eine Vorrichtung nach Anspruch 7 gelöst. Vorteilhafte Ausgestaltungen der Erfindung sind jeweils Gegenstand von weiteren Ansprüchen.

Bei dem Verfahren gemäß Anspruch 1 wird zunächst die Zentrifugalbeschleunigung in Horizontalebene ermittelt. Daraus wird erfindungsgemäß ein in Abhängigkeit von der Fahrsituation frei vorgebbarer Sollwert für die Absolutneigung des Wagenkastens gegenüber der als Inertialsystem betrachteten Erde gebildet. Weiterhin wird der Istwert der Absolutneigung des Wagenkastens gegenüber der als Inertialsystem betrachteten Erde ermittelt und mit Hilfe eines frei wählbaren Bildungsgesetzes wenigstens ein Regelsignal aus der Differenz zwischen Sollwert und Istwert der Absolutneigung des Wagenkastens gebildet. In Abhängigkeit vom gebildeten Regelsignal wird dann der Winkel zwischen Fahrwerk und Wagenkasten quer zur Fahrtrichtung verstellt.

Die erfindungsgemäße Lösung beruht auf der Erkenntnis, für die Einstellung der Wagenkastenneigung direkt diejenige physikalische Größe zu verwenden, die den Anteil der Querbeschleunigung, der von der Kurvenfahrt herrührt, kompensieren kann. Diese physikalische Größe ist der Neigungswinkel des Wagenkastens gegenüber der Richtung der Schwerkraft bzw. gegenüber der als horizontal verlaufend angenommenen Erdoberfläche.

Erfindungsgemäß wird dieser Neigungswinkel gegenüber der Erde durch eine Meßeinrichtung, die im Wagenkasten angeordnet ist, ermittelt und über eine Regeleinrichtung auf dem gewünschten Wert gehalten.

Durch die Meßeinrichtung im Wagenkasten wird also direkt die Neigung gegen die Horizontale als relevante Größe für die wirksame Querbeschleunigung gemessen. Dadurch erfolgt die Regelung der Wagenkastenneigung ohne Umweg über Zwischengrößen. Zusätzliche Informationen, etwa über die Lage des Drehgestells oder die Bauart des Gleisbettes, werden nicht benötigt. Damit sind auch keine Fehlreaktionen der Regeleinrichtung bei Störungen, z. B. Gleisunregelmäßigkeiten oder Seitenwind, möglich.

Der Sollwert für die Wagenkastenneigung wird dabei aus der Zentrifugalbeschleunigung in der Horizontalebene gebildet, wobei die Zentrifugalbeschleunigung z. B. aus der Winkelgeschwindigkeit um die Hochachse und der Fahrgeschwindigkeit ermittelt werden kann. Die Hochachse verläuft vorzugsweise parallel zur Schwerkraft. Es ist jedoch auch möglich, für die Ermittlung der Winkelgeschwindigkeit anstelle der erdfesten Hochachse eine dazu nicht orthogonale Achse des Wagenkastens (z. B. seine Hochachse) zu verwenden. Die Winkelgeschwindigkeit um eine derartige Achse muß dann durch Koordinatentransformation in eine Winkelgeschwindigkeit um die erdfeste Hochachse (unter Kenntnis des Winkels zwischen der erdfesten Hochachse und der für die Ermittlung herangezogenen Hochachse) umgerechnet werden. Der Sensor für die Winkelgeschwindigkeit um die Hochachse kann sich hierbei in einem in Fahrtrichtung weiter vorn gelegenen Fahrwerk oder Wagenkasten, z. B. im vordersten Fahrwerk bzw. Wagenkasten, oder im zu neigenden Wagen selbst befinden.

Bei Verwendung eines in Fahrtrichtung weiter vorn angeordneten Sensors kann die ohnehin kurze Filterzeit des Kreiselsensors vollständig kompensiert werden.

Zur Ermittlung der Zentrifugalbeschleunigung kann alternativ die Gleiskrümmung, wiederum unter Berücksichtigung der Fahrzeuggeschwindigkeit, herangezogen werden. In vorteilhafter Weise wird hierbei die Gleiskrümmung aus der Auslenkung mindestens einer Fahrwerkslängsachse gegenüber der Wagenkastenlängsachse ermittelt.

Durch die Bildung des Sollwertes für die Wagenkastenneigung aus der Zentrifugalbeschleunigung in der Horizontalebene kann das erfindungsgemäße Verfahren zwischen einer Gleisüberhöhung im Gleisbogen und einem Gleisüberhöhungsfehler in der Geraden zuverlässig unterscheiden. Nur bei einer Bogenfahrt treten Zentrifugalbeschleunigungen auf, deren Anteil in der Horizontalebene unabhängig von der auftretenden Gleisüberhöhung ist. Derartige Zentrifugalbeschleunigungen treten beim Befahren einer Störungsstelle in der Gleisgeraden nicht auf.

Da beim erfindungsgemäßen Verfahren - im Gegensatz zu den bekannten Verfahren - die Gleisüberhöhungen nicht zur Bildung des Sollwertes für die Absolutneigung des Wagenkastens gegenüber der als Inertialsystem betrachteten Erde herangezogen werden, erfolgt bei Gleisstörungen, die aus einer unterschiedlichen Höhenlage beider Schienen resultieren, kein ungewolltes Neigen des Wagenkastens. Die Betrachtung der Erde als Inertialsystem ist hierbei aufgrund der physikalischen Gegebenheiten zulässig.

Die Regelung erfolgt in jedem Wagen für sich, ist also prinzipiell autark.

Eine weitere Verbesserung kann bei der Regelung der Wagenkastenneigung dadurch erreicht werden, daß als weiterer Verfahrensschritt die Neigung des Drehgestells gegenüber der Horizontalen (Istwert) ermittelt wird und zusammen mit der bereits aus der Zentrifugalbeschleunigung ermittelten Absolutneigung des Wagenkastens (Sollwert) vorsteuernd zur Verstellung des Winkels zwischen Fahrwerk und Wagenkasten quer zur Fahrtrichtung dient (Anspruch 4). Die hierfür erforderliche Zusatz-Meßeinrichtung ist im Fahrwerk angeordnet (Anspruch 9). Im Gegensatz zu den bekannten Verfahren, bei denen der Winkel zwischen Fahrwerk und Wagenkasten die Regelgröße ist, ist auch das Vorsteuerverfahren (Anspruch 4) robust gegen Gleislagestörungen. Die Vorsteuerung nach Anspruch 4 stellt also eine weitere Verbesserung der Dynamik bei dem Regelverfahren gemäß Anspruch 1 dar und wird im Gegensatz zu den bekannten Verfahren nicht zur Bildung des Sollwertes für die Absolutneigung des Wagenkastens herangezogen.

Die Verwendung einer Inertialsensorik bietet gegenüber voneinander unabhängigen Kreisel- und Beschleunigungssensoren den Vorteil, daß die Offset- und Drift-Kompensation der Kreiselsignale automatisch immer gewährleistet ist.

In vorteilhafter Weise kann die Vorrichtung Drucksensoren, die in den Luftfedern des Fahrwerks angeordnet sind, zur on-line-Erfassung der Wagenkastenmasse umfassen. Damit ist eine automatische Anpassung der Reglerparameter an wechselnde Beladungszustände des Wagens möglich.

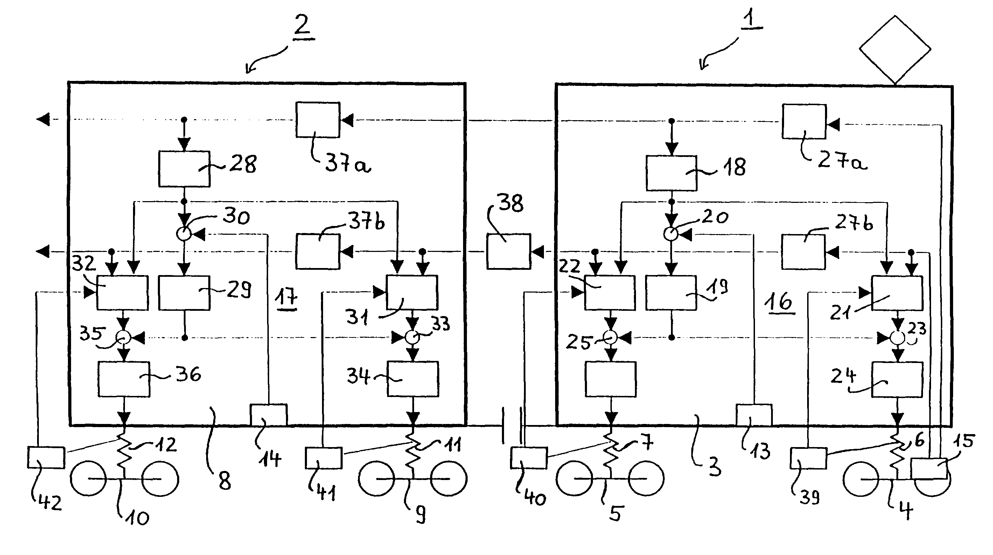

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch dargestellt ist.

In der Zeichnung ist als Ausführungsbeispiel ein Schienenfahrzeug dargestellt, das aus zwei miteinander gekoppelten Wagen 1 und 2 besteht. Der erste Wagen 1 ist als Triebwagen ausgebildet und befindet sich in Fahrtrichtung gesehen vor dem zweiten Wagen 2, der nicht angetrieben ist. Bei dem in der Zeichnung dargestellten Ausführungsbeispiel ist der erste Wagen 1 zwar angetrieben, das erfindungsgemäße Verfahren sowie die Vorrichtung hierzu sind jedoch unabhängig davon, ob der betreffende Wagen angetrieben ist oder nicht.

Der erste Wagen 1 umfaßt einen Wagenkasten 3, der auf zwei Fahrwerken 4 und 5 über Luftfedern 6 und 7 federnd und über entsprechende, nicht dargestellte Aufhängungen um seine Längsachse schwenkbar abgestützt ist.

Der zweite Wagen 2 umfaßt einen Wagenkasten 8, der auf die gleiche Weise wie der Wagenkasten 3 auf zwei Fahrwerken 9 und 10 über Luftfedern 11 und 12 federnd abgestützt ist.

In beiden Wagen 1 und 2 ist jeweils eine Meßeinrichtung 13 bzw. 14 angeordnet. Die Meßeinrichtung 13 bzw. 14 ist im gezeigten Ausführungsbeispiel jeweils im Wagenkasten 3 bzw. 8 angeordnet und umfaßt jeweils einen Sensor, vorzugsweise einen Kreiselsensor, für die Messung der Winkelgeschwindigkeit um die Hochachse.

Von der Meßeinrichtung 13 kann die Zentrifugalbeschleunigung in der Horizontalebene ermittelt werden. Falls erforderlich, kann dann daraus der Sollwert für die Absolutneigung des Wagenkastens 3 gebildet werden. Die Sollwerte für die Absolutneigung der einzelnen Wagenkästen sind sowohl geschwindigkeits- als auch gleisbogenabhängig. Bei konstanter Fahrzeuggeschwindigkeit erhalten alle Wagenkästen im Augenblick des Passierens eines beliebigen Gleispunktes denselben Sollwert für ihre Absolutneigung.

Durch die Meßeinrichtungen 13 und 14 werden die Istwerte der Absolutneigung der Wagenkästen 3 und 8 gegenüber der als Inertialsystem betrachteten Erde gemessen.

Ferner ist im Fahrwerk 4 des Wagens 1 (das ist in Fahrtrichtung gesehen das vorderste Fahrwerk) eine Zusatz-Meßeinrichtung 15 angeordnet, durch die der Istwert der Absolutneigung des Fahrwerks 4 gegenüber der als Inertialsystem betrachteten Erde meßbar sowie die Zentrifugalbeschleunigung in der Horizontalebene ermittelbar ist.

Die Ermittlung der Zentrifugalbeschleunigung in der Horizontalebene erfolgt im dargestellten Ausführungsbeispiel durch Messung der Winkelgeschwindigkeit um die erdfeste Hochachse, vorzugsweise mittels Kreiselsensoren, unter Berücksichtigung der Fahrzeuggeschwindigkeit.

Die Zusatz-Meßeinrichtung 15 muß nicht notwendigerweise im Fahrwerk 4 angeordnet sein. Es ist auch denkbar, die Zusatz-Meßeinrichtung in Fahrtrichtung gesehen weiter hinten anzuordnen, z. B. im Fahrwerk 9, wenn im Wagen 1 keine Passagiere befördert werden und der Wagenkasten 3 deshalb nicht geneigt werden muß bzw. wenn aus technischen Gründen im Fahrwerk 4 keine Zusatz-Meßeinrichtung untergebracht werden kann.

Im vorliegenden Ausführungsbeispiel werden die für die Ermittlung der Zentrifugalbeschleunigung in der Horizontalebene notwendigen physikalischen Größen nicht von der Meßeinrichtung 13, sondern von der Zusatz-Meßeinrichtung 15 gemessen. Es versteht sich in diesem Zusammenhang von selbst, daß die hierfür notwendige Fahrtgeschwindigkeit nur an einem einzigen Ort innerhalb des Schienenfahrzeuges gemessen werden muß (z. B. durch einen Geschwindigkeitssensor im Fahrwerk).

Weiterhin ist in jedem Wagenkasten 3 bzw. 8 jeweils eine Regeleinrichtung 16 bzw. 17 angeordnet. Für den ersten Wagen 1 umfaßt die Regeleinrichtung 16 in der vorliegenden Ausführungsform einen Sollwertgeber 18 und einen Regler 19.

Vom Sollwertgeber 18 wird, unter Berücksichtigung eines oberen Grenzwertes für die Querbeschleunigung in der Wagenkastenebene, ein von der Fahrsitutation abhängiger Sollwert für die Absolutneigung des Wagenkastens 3 gegenüber der als Inertialsystem betrachteten Erde gebildet.

Aus dem von der Meßeinrichtung 13 gemessenen Istwert und dem vom Sollwertgeber 18 gebildeten Sollwert für die Absolutneigung des Wagenkastens 3 wird in einem Subtrahierer 20 ein Differenzsignal gebildet, daß dem Regler 19 zugeführt wird.

Der von der Zusatz-Meßeinrichtung 15 ermittelte Istwert der Absolutneigung wird außerdem einer Vorsteuereinrichtung 21 sowie einer Vorsteuereinrichtung 22 zugeführt. Die Vorsteuereinrichtung 21 ist dem Fahrwerk 4 und die Vorsteuereinrichtung 22 dem Fahrwerk 5 zugeordnet. Den Vorsteuereinrichtungen 21 und 22 wird weiterhin der vom Sollwertgeber 18 gebildete Sollwert für die Absolutneigung des Wagenkastens 3 zugeführt.

Das im Regler 19 gebildete Regelsignal wird zusammen mit dem in der Vorsteuereinrichtung 21 gebildeten Vorsteuersignal einem Addierer 23 zugeführt. Der Addierer 23 bildet aus dem Regelsignal und dem Vorsteuersignal ein Summensignal, daß einer Verstelleinrichtung 24 für das Fahrwerk 4 zugeführt wird.

Gleichzeitig wird das im Regler 19 gebildete Regelsignal zusammen mit dem in der Vorsteuereinrichtung 22 gebildeten Vorsteuersignal einem Addierer 25 zugeführt. Der Addierer 25 bildet aus dem Regelsignal und dem Vorsteuersignal ebenfalls ein Summensignal, das einer Verstelleinrichtung 26 für das Fahrwerk 5 zugeführt wird.

Der Regler 19 wirkt über den Addierer 23 bzw. 25 immer auf die Verstelleinrichtung 24 bzw. 26 und wird durch die Vorsteuereinrichtung 21 bzw. 22 entlastet. Ist die Vorsteuerung durch die Vorsteuereinrichtungen 21 und 22 bereits gut genug, dann wird dem Vorsteuersignal durch den Regler 19 allenfalls ein geringes Regelsignal additiv überlagert. Durch die gemäß einer besonders vorteilhaften Ausgestaltung vorgesehenen Vorsteuereinrichtungen 21 und 22 erhält man also eine weitere Verbesserung der Dynamik bei dem erfindungsgemäßen Regelverfahren.

Um die Fahrzeuggeschwindigkeit und die konstruktiven Gegebenheiten im Wagen 1, wie z. B. den Abstand zwischen der Zusatz-Meßeinrichtung 15 und der Meßeinrichtung 13 (das ist im gezeigten Ausführungsbeispiel der halbe Mittenabstand der beiden Fahrwerke 4 und 5 voneinander) zu berücksichtigen, werden die Signale der Zusatz-Meßeinrichtung 15 über ein Verzögerungsglied 27a auf den Sollwertgeber 18 und über ein Verzögerungsglied 27b auf die Vorsteuereinrichtung 22 gegeben.

Die Ausgangssignale der Zusatz-Meßeinrichtung 15 (in den Verzögerungsgliedern 27a, 27b zeitverzögert) werden an die Regeleinrichtung 17 des zweiten Wagens 2 weitergeschaltet.

Die Regeleinrichtung 17 im zweiten Wagenkasten 8 umfaßt ebenfalls einen Sollwertgeber sowie einen Regler, wobei der Sollwertgeber mit 28 und der Regler mit 29 bezeichnet sind.

Aus dem von der Meßeinrichtung 14 gemessenen Istwert und dem vom Sollwertgeber 28 der Regeleinrichtung 17 gebildeten Sollwert für die Absolutneigung des Wagenkastens 8 wird in einem Subtrahierer 30 ein Differenzsignal gebildet, das dem Regler 29 zugeführt wird.

Der von der Zusatz-Meßeinrichtung 15 ermittelte Istwert der Absolutneigung des Fahrwerks 4 gegen Erde wird einer Vorsteuereinrichtung 31 sowie einer Vorsteuereinrichtung 32 zugeführt. Die Vorsteuereinrichtung 31 ist dem Fahrwerk 9 und die Vorsteuereinrichtung 32 dem Fahrwerk 10 zugeordnet. Den Vorsteuereinrichtungen 31 und 32 wird weiterhin der vom Sollwertgeber 28 gebildete Sollwert für die Absolutneigung des Wagenkastens 8 zugeführt.

Das im Regler 29 gebildete Regelsignal wird zusammen mit dem in der Vorsteuereinrichtung 31 gebildeten Vorsteuersignal einem Addierer 33 zugeführt. Der Addierer 33 bildet aus dem Regelsignal und dem Vorsteuersignal ein Summensignal, das einer Verstelleinrichtung 34 für das Fahrwerk 9 zugeführt wird.

Gleichzeitig wird das im Regler 29 gebildete Regelsignal zusammen mit dem in der Vorsteuereinrichtung 32 gebildeten Vorsteuersignal einem Addierer 35 zugeführt. Der Addierer 35 bildet aus dem Regelsignal und dem Vorsteuersignal ebenfalls ein Summensignal, das einer Verstelleinrichtung 36 für das Fahrwerk 10 zugeführt wird.

Der Regler 29 wirkt über den Addierer 33 bzw. 35 immer auf die Verstelleinrichtung 34 bzw. 36 und wird durch die Vorsteuereinrichtung 31 bzw. 32 entlastet. Ist bereits die Vorsteuerung durch die Vorsteuereinrichtungen 31 und 32 gut genug, dann wird dem Vorsteuersignal durch den Regler 29 allenfalls ein geringes Regelsignal additiv überlagert.

Um auch bei dem zweiten Wagen 2 die Fahrzeuggeschwindigkeit und die konstruktiven Gegebenheiten, z. B. den Mittenabstand der Fahrwerke 9 und 10 zueinander, zu berücksichtigen, werden die bereits im Verzögerungsglied 27a bzw. 27b zeitverzögerten Ausgangssignale der Zusatz-Meßeinrichtung 15 nochmals zeitverzögert. Das dem Sollwertgeber 28 zugeführte Ausgangssignal wird über ein Verzögerungsgleid 37a zeitverzögert. Das den Vorsteuereinrichtungen 31 und 32 zugeführte Ausgangssignal wird zunächst über das Verzögerungsglied 38 zeitverzögert und der Vorsteuereinrichtung 31 zugeführt. Gleichzeitig wird dieses Signal nochmals über ein Verzögerungsglied 37b der Vorsteuereinrichtung 32 zugeführt. Das Verzögerungsglied 37a berücksichtigt den Abstand der beiden Meßeinrichtungen 13 und 14, wohingegen das Verzögerungsglied 37b den Mittenabstand der beiden Fahrwerke 9 und 10 berücksichtigt.

Durch das Verzögerungsglied 38 wird der Mittenabstand zwischen dem vorderen Fahrwerk 9 des zweiten Wagens 2 und dem hinteren Fahrwerk 5 des ersten Wagens 1 berücksichtigt.

In allen Verzögerungsgliedern (Verzögerungsglieder 27a und 27b im Wagenkasten 3, Verzögerungsglieder 37a und 37b im Wagenkasten 8 sowie Verzögerungsglied 38) wird die Fahrzeuggeschwindigkeit berücksichtigt.

Im dargestellten Ausführungsbeispiel sind in den Luftfedern 6 und 7 sowie 11 und 12 der Fahrwerke 4 und 5 bzw. 9 und 10 Drucksensoren 39 bis 42 angeordnet. Damit wird das Gewicht der beiden beladenen Wagenkästen 1 und 2 on-line erfaßt. Damit ist eine automatische Anpassung der Reglerparameter an wechselnde Beladungszustände der Wagen 1 und 2 möglich.

## Patentansprüche

1. Verfahren zur Regelung der erdbezogenen Wagenkastenneigung bei einem Schienenfahrzeug mit mindestens einem Wagen (1,2), dessen Wagenkasten (3,8) federnd und schwenkbar um die Längsachse auf Fahrwerken (4,5;9,10) mit wenigstens einem Radpaar sitzt, wobei das Verfahren folgende Schritte umfaßt:
a) Ermittlung der Zentrifugalbeschleunigung in Horizontalebene,
b) daraus Bildung eines in Abhängigkeit von der Fahrsituation frei vorgebbaren Sollwertes für die Absolutneigung des Wagenkastens (3,8) gegenüber der als Inertialsystem betrachteten Erde,
c) Ermittlung des Istwertes der Absolutneigung des Wagenkastens (3,8) gegenüber der als Inertialsystem betrachteten Erde,
d) Bildung wenigstens eines Regelsignals aus der Differenz zwischen Sollwert und Istwert der Absolutneigung des Wagenkastens (3,8) mit Hilfe eines frei wählbaren Bildungsgesetzes,
e) Verstellung des Winkels zwischen Fahrwerk (4,5;9,10) und Wagenkasten (3,8) quer zur Fahrtrichtung in Abhängigkeit vom gebildeten Regelsignal.

2. Verfahren nach Anspruch 1, mit folgendem Merkmal:
f) ein von der Fahrsituation abhängiger oberer Grenzwert für die Querbeschleunigung in der Wagenkastenebene wird nicht überschritten.

3. Verfahren nach Anspruch 1, mit folgenden Merkmalen:
g) zumindest ein Teil der für die Ermittlung der Zentrifugalbeschleunigung notwendigen physikalischen Größen wird, in Fahrtrichtung gesehen, vor dem zu neigenden Wagenkasten (8) gemessen und
h) diese Meßgrößen und/oder wenigstens ein daraus abgeleitetes Signal werden an den zu neigenden Wagenkasten (8) weitergeleitet.

4. Verfahren nach Anspruch 1, mit folgenden Merkmalen:
i) die Absolutneigung des Fahrwerks (4,5;9,10) gegen Erde wird gemessen und
j) aus der Differenz aus Gleisüberhöhung und Sollwert der Absolutneigung des Wagenkastens (3,8) gegenüber der Erde wird wenigstens ein Stellsignal zur Verstellung des Winkels zwischen Fahrwerk (4,5;9,10) und Wagenkasten (3,8) quer zur Fahrtrichtung gebildet.

5. Verfahren nach Anspruch 1, mit folgenden Merkmalen:
k) die Absolutneigung des Fahrwerks (4) gegen Erde wird vor dem zu neigenden Wagenkasten (8) gemessen und
l) die gemessene Absolutneigung und/oder wenigstens ein daraus abgeleitetes Signal werden an den zu neigenden Wagenkasten (8) weitergeleitet.

6. Verfahren nach Anspruch 4 oder 5, mit folgendem Merkmal:
m) aus den gemessenen und/oder berechneten Absolutneigungen aller Fahrwerke (4,5;9,10) eines Wagens (1,2) werden die Stellsignale zur Verstellung der Winkel zwischen den Fahrwerken (4,5; 9,10) und dem Wagenkasten (3,8) quer zur Fahrtrichtung unter Beachtung eines vorgebbaren oberen Grenzwertes für die Torsion des Wagenkastens (3,8) um seine Längsachse gebildet.

7. Vorrichtung zur Durchführung des Verfahrens nach Anspruch 1, mit einer Verstelleinrichtung zur Verstellung des Winkels zwischen Fahrwerk (4,5;9,10) und Wagenkasten (3,8) quer zur Fahrtrichtung, wobei die Vorrichtung folgende Merkmale umfaßt:
a) wenigstens eine Meßeinrichtung (13,14), die im Wagenkasten (3,8) angeordnet ist, zur Ermittlung der Zentrifugalbeschleunigung in der Horizontalebene,
b) wenigstens einen Sollwertgeber (18) zur Bildung eines in Abhängigkeit von der Fahrsituation frei vorgebbaren Sollwertes für die Absolutneigung des Wagenkastens (3,8) gegenüber der als Inertialsystem betrachteten Erde,
c) wenigstens eine Meßeinrichtung (13,14) zur Messung des Istwertes der Absolutneigung des Wagenkastens (3,8) gegenüber der als Inertialsystem betrachteten Erde,
d) wenigstens eine Regeleinrichtung (16, 17) zur Bildung wenigstens eines Regelsignales aus der Differenz zwischen Sollwert und Istwert der Absolutneigung des Wagenkastens (3,8) mit Hilfe eines frei wählbaren Bildungsgesetzes,
e) wenigstens eine Verstelleinrichtung (24,26,34,36) zur Verstellung des Winkels zwischen Fahrwerk (4,5;9,10) und Wagenkasten (3,8) quer zur Fahrtrichtung in Abhängigkeit vom gebildeten Regelsignal.

8. Vorrichtung nach Anspruch 7,mit folgenden Merkmalen:
f) die Meßeinrichtung zur Ermittlung der Zentrifugalbeschleunigung in der Horizontalebene ist, in Fahrtrichtung gesehen, vor dem zu neigenden Wagenkasten (8) angeordnet und
g) eine Einrichtung zur Signalweiterschaltung, durch die zumindest ein Teil dieser Meßgrößen und/oder wenigstens ein daraus abgeleitetes Signal an den zu neigenden Wagenkasten (8) gegeben wird.

9. Vorrichtung nach Anspruch 7, mit folgenden Merkmalen:
h) im Fahrwerk ist wenigstens eine Zusatz-Meßeinrichtung (15) angeordnet, durch die der Istwert der Absolutneigung des Fahrwerks (4) gegen Erde meßbar ist, und
i) in der Regeleinrichtung (16,17) aus der Differenz aus Gleisüberhöhung und Sollwert der Absolutneigung des Wagenkastens (3,8) gegenüber der Erde wenigstens ein Stellsignal zur Verstellurg des Winkels zwischen Fahrwerk (4,5;9,10) und Wagenkasten (3,8) quer zur Fahrtrichtung gebildet wird.

10. Vorrichtung nach Anspruch 7, mit folgenden Merkmalen:
j) die Zusatz-Meßeinrichtung (15) ist, in Fahrtrichtung gesehen, vor dem zu neigenden Wagenkasten (8) angeordnet und
k) eine Einrichtung zur Signalweiterschaltung (27b,38), durch die die gemessene Absolutneigung des Fahrwerks (4) gegen Erde und/oder ein daraus abgeleitetes Signal über an den zu neigenden Wagenkasten (8) gegeben wird.

11. Vorrichtung nach Anspruch 9,mit folgendem Merkmal:
l) von der Zusatz-Meßeinrichtung (15) wird zumindest ein Teil der für die Ermittlung der Zentrifugalbeschleunigung notwendigen physikalischen Größen gemessen.

12. Vorrichtung nach Anspruch 7, mit folgendem Merkamal:
m) in den Luftfedern (6,7,11,12) des Fahrwerks (4,5;9,10) sind Drucksensoren (39-42) zur Erfassung des Gewichts des beladenen Wagenkastens (3,8) angeordnet.

## Claims

1. Method for controlling the earth-related inclination of a waggon of a rail vehicle having at least one coach (1, 2), the waggon (3, 8) of which is disposed on chassis (4, 5; 9, 10) by springs and such that it can be pivoted about the longitudinal axis, the chassis having at least one pair of wheels, with the method comprising the following steps:
a) determining the centrifugal acceleration in the horizontal plane,
b) forming from this a desired value for the absolute inclination of the waggon (3, 8) relative to the earth which is considered as an inertial system, which desired value can be freely specified in dependence upon the travel situation,
c) determining the actual value of the absolute inclination of the waggon (3, 8) relative to the earth which is considered as an inertial system,
d) forming at least one control signal from the difference between the desired value and the actual value of the absolute inclination of the waggon (3, 8) with the aid of a freely selectable formation law,
e) adjusting the angle between the chassis (4, 5; 9, 10) and the waggon (3, 8) at right angles to the direction of travel as a function of the control signal formed.

2. Method according to claim 1, having the following feature:
f) an upper limit for the transverse acceleration in the plane of the waggon, which depends on the travel situation, is not exceeded.

3. Method according to claim 1, having the following features:
g) at least some of the physical quantities necessary to determine the centrifugal acceleration are measured in front of the waggon (8) to be inclined, when seen in the direction of travel, and
h) these measured quantities and/or at least one signal derived from them are relayed to the waggon (8) which is to be inclined.

4. Method according to claim 1, having the following features:
i) the absolute inclination of the chassis (4, 5; 9, 10) relative to the earth is measured and
j) from the difference between the banking of the track and the desired value of the absolute inclination of the waggon (3, 8) relative to the earth at least one adjusting signal is formed for adjusting the angle between the chassis (4, 5; 9, 10) and the waggon (3, 8) at right angles to the direction of travel.

5. Method according to claim 1, having the following features:
k) the absolute inclination of the chassis (4) relative to the earth is measured in front of the waggon (8) to be inclined, and
l) the measured absolute inclination and/or at least one signal derived from it are relayed to the waggon (8) to be inclined.

6. Method according to claim 4 or 5, having the following feature:
m) from the measured and/or calculated absolute inclinations of all chassis (4, 5; 9, 10) of a coach (1, 2) the adjusting signals are formed for adjusting the angles between the chassis (4, 5; 9, 10) and the waggon (3, 8) at right angles to the direction of travel, taking into account an upper limit which can be specified for the torsion of the waggon (3, 8) about its longitudinal axis.

7. Device for carrying out the method according to claim 1, having an adjusting device to adjust the angle between the chassis (4, 5; 9, 10) and the waggon (3, 8) at right angles to the direction of travel, with the device comprising the following features:
a) at least one measurement device (13, 14), which is arranged in the waggon (3, 8), to determine the centrifugal acceleration in the horizontal plane,
b) at least one desired value generator (18) to form a desired value for the absolute inclination of the waggon (3, 8) relative to the earth which is considered as an inertial system, which desired value can be freely specified in dependence upon the travel situation,
c) at least one measurement device (13, 14) to measure the actual value of the absolute inclination of the waggon (3, 8) relative to the earth which is considered as an inertial system,
d) at least one control device (16, 17) to form at least one control signal from the difference between the desired value and the actual value of the absolute inclination of the waggon (3, 8) with the aid of a freely selectable formation law,
e) at least one adjusting device (24, 26, 34, 36) to adjust the angle between the chassis (4, 5; 9, 10) and the waggon (3, 8) at right angles to the direction of travel in dependence upon the control signal formed.

8. Device according to claim 7, having the following features:
f) the measurement device for determining the centrifugal acceleration in the horizontal plane is arranged in front of the waggon (8) to be inclined, when seen in the direction of travel, and
g) a device for signal relaying, by means of which at least some of these measured quantities and/or at least one signal derived therefrom is sent to the waggon (8) to be inclined.

9. Device according to claim 7, having the following features:
h) at least one additional measurement device (15) is arranged in the chassis, by means of which device the actual value of the absolute inclination of the chassis (4) relative to the earth can be measured, and
i) in the control device (16, 17) at least one adjusting signal is formed from the difference between the track banking and the desired value of the absolute inclination of the waggon (3, 8) relative to the earth, for adjusting the angle between chassis (4,5; 9,10) and waggon (3, 8) at right angles to the direction of travel.

10. Device according to claim 7, having the following features:
j) the additional measurement device (15) is arranged in front of the waggon (8) to be inclined, when seen in the direction of travel, and
k) a device for signal relaying (27b, 38), by means of which the measured absolute inclination of the chassis (4) relative to the earth and/or a signal derived from it is sent to the waggon (8) to be inclined.

11. Device according to claim 9, having the following feature:
l) at least some of the physical quantities necessary to determine the centrifugal acceleration are measured by the additional measurement device (15).

12. Device according to claim 7, having the following feature:
m) pressure sensors (39-42) are arranged in the pneumatic springs (6, 7, 11, 12) of the chassis (4, 5; 9, 10) to determine the weight of the loaded waggon (3, 8).

## Revendications

1. Procédé de régulation de l'inclinaison par rapport à la terre d'une caisse de wagon d'un véhicule sur rails ayant au moins un wagon (1, 2) dont la caisse de wagon (3, 8) est montée suspendue et pivotante par rapport à l'axe longitudinal sur des bogies (4, 5 ; 9, 10) par au moins une paire de roues, le procédé comprenant les étapes suivantes :
a) détermination de l'accélération centrifuge dans le plan horizontal,
b) formation à partir de là d'une valeur de consigne pouvant être prescrite librement en fonction de la situation de marche et correspondant à l'inclinaison absolue de la caisse de wagon (3, 8) par rapport à la terre considérée comme un système inertiel,
c) détermination de la valeur réelle de l'inclinaison absolue de la caisse de wagon (3, 8) par rapport à la terre considérée comme un système inertiel,
d) formation d'au moins un signal de régulation à partir de la différence entre la valeur de consigne et la valeur réelle de l'inclinaison absolue de la caisse de wagon (3, 8) à l'aide d'une loi de formation pouvant être choisie librement,
e) réglage de l'angle entre le bogie (4, 5 ; 9, 10) et la caisse de wagon (3, 8) transversalement par rapport au sens de la marche en fonction du signal de régulation formé.

2. Procédé selon la revendication 1, avec la caractéristique suivante :
f) on ne dépasse pas une valeur limite supérieure, qui dépend de la situation de marche, pour l'accélération transversale dans le plan de la caisse de wagon.

3. Procédé selon la revendication 1, avec les caractéristiques suivantes :
g) on mesure au moins une partie des grandeurs physiques nécessaires à la détermination de l'accélération centrifuge en un point situé en avant, vu dans le sens de la marche, de la caisse de wagon à incliner (8) et
h) on retransmet à la caisse de wagon à incliner (8) ces grandeurs mesurées et/ou au moins un signal déduit de ces grandeurs mesurées.

4. Procédé selon la revendication 1, avec les caractéristiques suivantes :
i) on mesure l'inclinaison absolue du bogie (4, 5 ; 9, 10) par rapport à la terre et
j) on forme à partir de la différence entre la surélévation des rails et la valeur de consigne de l'inclinaison absolue de la caisse de wagon (3, 8) par rapport à la terre au moins un signal de réglage pour régler l'angle entre le bogie (4, 5 ; 9, 10) et la caisse de wagon (3, 8) transversalement par rapport au sens de la marche.

5. Procédé selon la revendication 1, avec les caractéristiques suivantes :
k) on mesure l'inclinaison absolue du bogie (4) par rapport à la terre avant la caisse de wagon à incliner (8) et
l) on retransmet à la caisse de wagon à incliner (8) l'inclinaison absolue mesurée et/ou au moins un signal déduit de cette inclinaison absolue mesurée.

6. Procédé selon la revendication 4 ou 5, avec la caractéristique suivante :
m) on forme à partir des inclinaisons absolues mesurées et/ou calculées de tous les bogies (4, 5 ; 9, 10) d'un wagon (1, 2) les signaux de réglage pour régler l'angle entre les bogies (4, 5 ; 9, 10) et la caisse de wagon (3, 8) transversalement par rapport au sens de la marche en respectant une valeur limite supérieure pouvant être prescrite pour la torsion de la caisse de wagon (3, 8) autour de son axe longitudinal.

7. Installation pour la mise en oeuvre du procédé selon la revendication 1, comprenant un dispositif de réglage pour régler l'angle entre le bogie (4, 5 ; 9, 10) et la caisse de wagon (3, 8) transversalement par rapport au sens de la marche, l'installation comprenant les caractéristiques suivantes :
a) au moins un dispositif de mesure (13, 14), qui est prévu dans la caisse de wagon (3, 8), pour la détermination de l'accélération centrifuge dans le plan horizontal,
b) au moins un transmetteur de valeur de consigne (18) pour la formation d'une valeur de consigne pouvant être prescrite librement en fonction de la situation de marche et correspondant à l'inclinaison absolue de la caisse de wagon (3, 8) par rapport à la terre considérée comme un système inertiel,
c) au moins un dispositif de mesure (13, 14) pour la mesure de la valeur réelle de l'inclinaison absolue de la caisse de wagon (3, 8) par rapport à la terre considérée comme un système inertiel,
d) au moins un dispositif de régulation (16, 17) pour la formation d'au moins un signal de régulation à partir de la différence entre la valeur de consigne et la valeur réelle de l'inclinaison absolue de la caisse de wagon (3, 8) à l'aide d'une loi de formation pouvant être choisie librement,
e) au moins un dispositif de réglage (24, 26, 34, 36) pour le réglage de l'angle entre le bogie (4, 5 ; 9, 10) et la caisse de wagon (3, 8) transversalement par rapport au sens de la marche en fonction du signal de régulation formé.

8. Installation selon la revendication 7, ayant les caractéristiques suivantes :
f) le dispositif de mesure pour la détermination de l'accélération centrifuge dans le plan horizontal est prévu, vu dans le sens de la marche, en avant de la caisse de wagon à incliner (8) et
g) un dispositif pour la retransmission du signal retransmet à la caisse de wagon à incliner (8) au moins une partie de ces grandeurs mesurées et/ou au moins un signal déduit de ces grandeurs mesurées.

9. Installation selon la revendication 7, ayant les caractéristiques suivantes :
h) il est prévu dans le bogie au moins un dispositif de mesure supplémentaire (15) qui peut mesurer la valeur réelle de l'inclinaison absolue du bogie (4) par rapport à la terre, et
i) le dispositif de régulation (16, 17) forme à partir de la différence entre la surélévation des rails et la valeur de consigne de l'inclinaison absolue de la caisse de wagon (3, 8) par rapport à la terre au moins un signal de réglage pour régler l'angle entre le bogie (4, 5; 9, 10) et la caisse de wagon (3, 8) transversalement par rapport au sens de la marche.

10. Installation selon la revendication 7, ayant les caractéristiques suivantes :
j) le dispositif de mesure supplémentaire (15) est prévu, vu dans le sens de la marche, en avant de la caisse de wagon à incliner (8) et
k) un dispositif pour la retransmission du signal (27b, 38) retransmet à la caisse de wagon à incliner (8) l'inclinaison absolue mesurée du bogie (4) par rapport à la terre et/ou un signal déduit de cette inclinaison absolue mesurée.

11. Installation selon la revendication 9, ayant la caractéristique suivante :
l) le dispositif de mesure supplémentaire (15) mesure au moins une partie des grandeurs physiques nécessaires à la détermination de l'accélération centrifuge.

12. Installation selon la revendication 7, ayant la caractéristique suivante :
m) des capteurs de pression (39 à 42) pour la détection du poids de la caisse de wagon (3, 8) chargée sont prévus dans les amortisseurs pneumatiques (6, 7, 11, 12) du bogie (4, 5 ; 9, 10).
